# EUROPEAN PATENT APPLICATION

(11) **EP 2 722 439 A1**
(43) Date of publication of application: **23.04.2014**
(21) Application number: 11867948.9
(22) Date of filing: 21.06.2011
(51) Int. Cl.: E01B 1/00, E01B 29/00

(54) **METHOD FOR MANUFACTURING SOLID THREE-DIMENSIONAL CONCRETE BLOCK AND METHOD FOR LAYING CONCRETE TRACKS USING CONCRETE BLOCK MANUFACTURED USING THE METHOD**

(30) Priority: 16.06.2011 KR 20110058490
(71) Applicant: Kang, Nam Hun, Seoul 152-080 (KR)
(72) Inventor: Kang, Nam Hun, Seoul 152-080 (KR)
(74) Representative: Munk, Ludwig
(86) International application number: PCT/KR2011/004502
(87) International publication number: WO 2012/173297

(57) **Abstract**

The present invention relates to a method for manufacturing a concrete block, comprising the steps of: measuring the planned alignment considering the horizontal alignment, slope and cant of a site on which railway tracks are to be laid; arranging a plurality of first temporary assembly supports corresponding to the measured horizontal alignment; installing first temporary rails on the first temporary assembly supports, and adjusting the slope and cant in between the first temporary rails to correspond to the measured slope and cant; installing a plurality of first molds on the first temporary rails, following along therewith, so that the slope and cant correspond to the measured slope and cant; installing a pair of second molds along the longitudinal direction of the first temporary rails, thereby closing off the upper lateral sides of the first molds; arranging, to the horizontal alignment, a plurality of second temporary assembly supports corresponding to the first temporary assembly supports, on the outer sides of the first temporary assembly supports; installing second temporary rails on the second temporary assembly supports so that a vertical alignment correspond to the vertical alignment of the on-site roadbed; pouring concrete; forming the concrete surface with a finisher moving along the second temporary rails; curing the concrete; and separating the cured concrete from the first and second molds, and subsequently turning the concrete over.

## Description

### CROSS-REFERENCE TO RELATED APPLICATION

This Application is a Section 371 National Stage Application of International Application No. PCT/KR2011/004502, filed June 21, 2011, the contents of which is hereby incorporated by reference in its entirety.

### BACKGROUND OF THE INVENTION

### TECHNICAL FIELD

The present invention relates to a method for manufacturing a concrete block in advance in a factory, and more specifically, to a method for manufacturing a solid three-dimensional concrete block through which a railroad tie and a ballast are formed integrally in one process, rather than needing an additional process, and further to a method for laying a concrete railroad on-site using such a concrete block.

### BACKGROUND ART

In general, a track is constituted with a rail and its components, railroad ties and ballast, wherein the ballast is formed with a certain thickness on a solid roadbed, the railroad ties are laid on the ballast at regular intervals and two rows of rails spaced apart from each other at a predetermined interval are fastened in parallel to the railroad ties. Here, the upper part of the ballast that supports the weight of a train directly, together with the rail-beds, is generally called as a track.

A solid bed track refers to a track in which rails are connected directly to a rail supporter, while deleting some components of a conventional track configuration, includes a non-ballast track or a non-railroad tie track. Among the components of a track, ballast can be divided into aggregate ballast and concrete ballast, and the concrete ballast is further divided into buried railroad tie type concrete ballast, solid bed type concrete ballast, and floating slab ballast.

Such concrete ballast is generally manufactured by pouring concrete at a site to form ballast, and the alignment of a route to form a track is configured complicatedly with various variations of many vertical curves and horizontal curves.

Accordingly, though it is a principle to design a route as a straight line and flatness, many curves and slopes have to be set practically according to property of the railroad alignment.

In a case of a straight railroad line, the heights of the rails on both sides will be equal, however in a case of a curved railroad line, a slope with a difference in the heights of both rails (cant) is required in order to set the sum of the centrifugal force due to the running of a train and the gravitation due to the weight of the train to the center of the gauge of a track, therefore the arrangement preciseness of a track panel is a very important factor for stability when a train is running along a curve.

When an engineer constructs an alleviating section in a curved line where the curvature of the curved line varies continuously, as in a conventional art, the preciseness is extremely low, and therefore it is impossible for the engineer to align practically transverse and longitudinal slopes in an alleviating curve section (which varies linearly) which connect substantially a straight line and a curved line.

That is, the alleviating curved section has the curvatures that vary linearly, therefore it becomes impossible to install an iron arrangement and molds the concrete ballast corresponding to such variations accurately, and thereby the construction preciseness of the concrete ballast is deteriorated.

Meanwhile, when forming the solid bed type concrete ballast constituted of concrete and the solid bed ballast fastening mechanisms, the alignment of the concrete ballast has to correspond to that of the planned line, the concrete ballast has to be installed to maintain accurately the slopes of the transverse and longitudinal directions thereof, and sufficient fastening force and adhesion of the solid bed ballast fastening mechanism and the concrete have to be ensured thereby to maintain stability of train running and concrete ballast.

As described above, the solid bed type concrete ballast has to be designed so as to provide sufficient fastening force between the concrete and the solid bed ballast fastening mechanism and absorb vibration therefrom, however, as in the conventional construction method, in a case where the solid bed ballast fastening mechanism is suspended first, and then the concrete is poured in later (TOP-DOWN system), many problems are caused, including the concrete sinking due to dry contraction of the contact surface between the solid bed ballast fastening mechanisms and the concrete ballast, bad adhesion owing to inferior filling when pouring concrete, gaps that are produced when pouring concrete into the contact surface between the solid bed ballast fastening mechanisms and the concrete ballast, and the consequent deterioration in stability of the track structure. Additionally, in a case of a TOP-DOWN system, the poor adhesive components have to be repaired after inspecting the adhesion by disassembling the solid bed ballast fastening mechanisms again while the construction is completed, causing an increase in cost.

Additionally, in a case where the concrete ballast is constructed on-site according to the related art, concrete has to be transported to a site, so watery concrete, that is, concrete with high slump is applied. Specially, most solid bed type concrete ballasts are installed in tunnels or underground sections, and it is inevitable to use watery concrete since concrete has to be supplied using a concrete portable with laying a compression pipe in the underground sections and using a pump car in elevated sections. As described above, as watery concrete has to be used at the on-site pouring of concrete, problems such as cracks from concrete bleeding or from dry contraction as drawbacks of the watery concrete occur, and moreover, when setting a cant, errors on the sectional surface of the ballast are also produced frequently as the watery concrete moves to the direction of the gravitation. In order to solve such problems, a method for constructing the concrete ballast using concrete with low slump is required.

According to a related art, although there is a factory-made slab ballast, which is formed by assembling the components at the site after manufacturing the components at a factory, a conventional slab ballast is constructed by using blocks having uniform shapes of a hexahedron, so there are many difficulties in forming the ballast having a three-dimensional shape at a curved track.

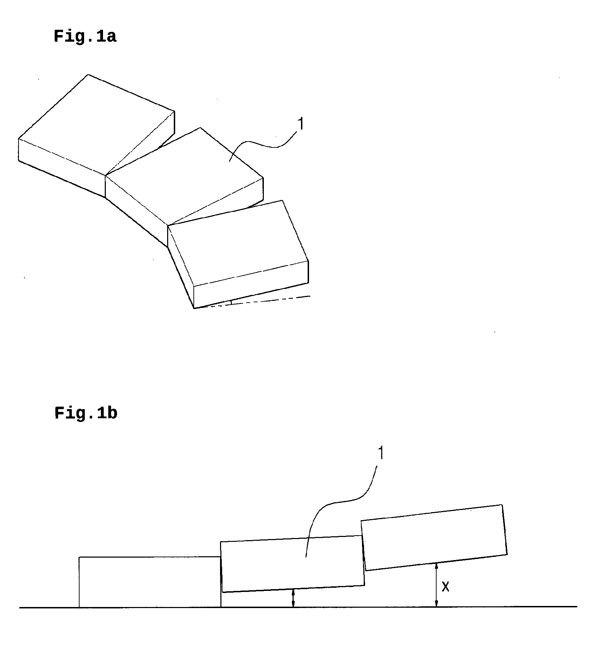

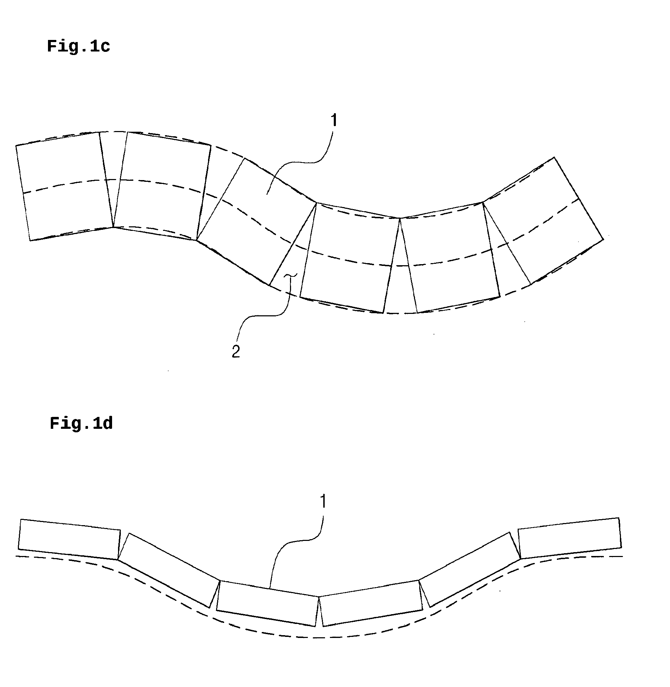

For this, referring to FIG. 1a and FIG. 1d, a detailed description thereof will be made below.

First, as shown in FIG. 1a, it is impossible to set a transverse slope (cant) with a conventional precast block 1 in a hexahedron shape. That is, as the precast block is shaped as a hexahedron, the amount of the transverse slope between the respective precast blocks 1 is exhibited discontinuously and moreover, the distances of the respective blocks spaced from a roadbed are irregular(refer to FIG. 1b). As a result, when connecting the surface of a roadbed with a precast block with mortar, etc., the filling amount increases due to the irregular spaced distances and thereby causing many difficulties when installing the blocks at on-site.

Further, as shown in FIG. 1C, when forming a planar curve section, the precast block 1 is formed with rectangular planes, so the planned alignment becomes different from the block alignment when the precast blocks are connected, and it causes alignment inconsistency and a gap 2 is produced between the precast blocks, requiring an additional filling operation. Especially, when the solid bed ballast fastening mechanisms (not illustrated) are installed on such a precast block at the same intervals, it becomes impossible to lay a rail on the planar curve. In short, with a conventional precast block, the setting of a radius of a curve which is varied in an alleviating curve section of a planar curve is impossible.

Additionally, as shown in FIG. 1d, when using the conventional precast block 1, gaps are produced between the blocks on the roadbed of a vertical curve and moreover, the distance spaced from the roadbed becomes irregular. With the conventional precast block 1in a hexahedron shape, it is impossible to construct the ballast, matching with a radius of a vertical curve which is varied in a section of a vertical curve.

As described above, the horizontal alignment, vertical alignment and alignment consistency cannot be achieved with the conventional precast block, and further a separate operation to fill the gap is required and the mortar filling amount is increased due to the irregularity of spaced distances from the surface of the roadbed.

Moreover, in case of the conventional on-site construction, ballast is formed by pouring concrete while railroad ties are formed and suspended first, however, the concrete is not filled densely between the railroad ties and ballast to cause bad adhesion, and as a result a gap is produced there between, causing deterioration of the stability of the track structure.

Meanwhile, the railroad ties for railroad tracks are shaped variously wherein in the conventional concrete pouring system, the filling degree at the upper surface of the railroad ties decreases in manufactured railroad ties, for example, the railroad ties of a slab track.

### DISCLOSURE

### TECHNICAL PROBLEM

The present invention has been made in an effort to solve the above-described problems associated with prior art and an object of the present invention is to provide a method for manufacturing a solid three-dimensional concrete block, through which railroad ties and ballast can be integrally formed in one process rather than needing an additional process.

Another object of the present invention is to provide a method for manufacturing a solid three-dimensional concrete block, through which concrete can be filled densely when pouring concrete.

Further, another object of the present invention is to provide a method for manufacturing a solid three-dimensional concrete block, through which it is not necessary to align additionally transverse and longitudinal slopes when assembling on-site.

Still another object of the present invention is to provide a method for manufacturing a solid three-dimensional concrete block, through which fastening force and adhesion with the rail fastening mechanisms can be improved.

Still further another object of the present invention is to provide a method for manufacturing a solid three-dimensional concrete block, through which concrete with low slump can be used in order to improve problems caused when pouring watery concrete.

Meanwhile, an object of the present invention is to provide a method for manufacturing a solid three-dimensional concrete block, through which horizontal alignment, vertical alignment, etc. of the concrete block can be corresponded when assembling on-site and additional filling operation is not necessary since no gap is produced between the concrete blocks.

Another object of the present invention is to provide a method of laying rail tracks using the concrete block.

### TECHNICAL SOLUTION

The objects as described above are achieved by providing a method of manufacturing a solid three-dimensional concrete block in which a plurality of the concrete blocks are connected to form a railway track, including: measuring the planned alignment considering horizontal alignment, slope and cant of a site on which a railway track is to be laid; arranging a plurality of the first temporary assembly supports as horizontal alignments which are symmetrical to the measured horizontal alignment on both sides of the ground of a factory; installing a pair of first temporary rails on the first temporary assembly supports, respectively, to be provided with horizontal alignments symmetrical to the measured horizontal alignments, and adjusting the installing of the first temporary rails such that the slope and cant corresponding to the measured slope and cant are provided between the first temporary rails; installing a plurality of first molds formed in a plate shape on the first temporary rails and arranging them along the first temporary so that the slope and cant corresponding to the measured slope and cant are provided to a plurality of the first molds; installing a pair of second molds along the longitudinal direction of the first temporary rails to close upper lateral sides of the first molds; installing a pair of second temporary assembly supports to be disposed on the outside of the first temporary assembly supports, respectively, and arranging a plurality thereof as horizontal alignment corresponding to the first temporary assembly supports; installing a pair of second temporary rails on the second temporary assembly supports, respectively, and adjusting the installation of the second temporary rails such that a vertical alignment corresponding to the vertical alignment on-site roadbed is provided; pouring concrete over the first molds; shaping a surface of concrete poured with a finisher moving along the second temporary rails; curing the poured concrete; and separating the cured concrete from the first molds and the second molds, and subsequently turning the concrete over.

According to a preferred aspect of the present invention, railroad tie beds are formed to be protruded downwardly at locations spaced from the center to both ends on the lower surfaces of the first mold.

According to another aspect of the present invention, the first mold is formed in a shape of a rectangular plate while lower curves are formed to be connected with the first temporary rail on both ends and a pointed portion is formed at each rear end part so as to adjust an angle of neighboring another first mold.

According to further another aspect of the present invention, a plurality of embedded nuts are mounted to the first mold to be directed upward at positions spaced from a center portion to both ends

According to still further aspect of the present invention, the method further includes a step of mounting a rail fastening mechanisms to the concrete block after turning the concrete block over by using bolts that are fastened the embedded nuts provided in the concrete block.

Meanwhile, according to another aspect of the present invention, a shoulder for fastening the rail is connected through the lower surface of the first mold to be protruded downwardly.

The objects as described above are achiever by a method of manufacturing a solid three-dimensional concrete block in which a plurality of concrete blocks are connected to form a railway track, including: measuring the planned alignment considering horizontal alignment, slope and cant of a site on which a railway track is to be laid; arranging a plurality of first temporary assembly supports as horizontal alignments which is symmetrical to the measured horizontal alignment on both sides of the ground of a factory; installing a pair of first temporary rails on the first temporary assembly supports, respectively, to be provided with horizontal alignments symmetrical to the measured alignments, and adjusting the installing of the first temporary rails such that the slope and cant corresponding to the measured slope and cant are provided between the first temporary rails; installing a plurality of first molds formed in a plate shape on the first temporary rails and arranging them along the first temporary so that the slope and cant corresponding to the measured slope and cant are provided to the plurality of molds; installing a pair of second molds along the longitudinal direction of the first temporary rails to close the upper lateral sides of the first molds; pouring concrete over the first molds; curing the poured concrete; and separating the cured concrete from the first molds and the second molds, and subsequently turning the concrete over.

### ADVANTAGEOUS EFFECTS

According to the method for manufacturing a solid three-dimensional concrete block of the present invention, railroad ties and ballast of a railway track can be formed integrally in one process, and further the concrete can be filled densely when pouring, there is no probability that any gaps between the railroad ties and the ballast are produced.

Additionally, since the concrete block is manufactured as a turning-over type, the concrete can be filled densely when pouring , and moreover, the shape of the railroad ties to be formed on the upper surface of the concrete block may be applied diversely without limitation, and various rail fastening mechanisms can be applied.

Additionally, since the concrete is poured after mounting embedded nuts to the molds, an additional perforation process for mounting the rail fastening mechanisms to the concrete block is not required, thereby required construction time can be shortened.

Additionally, the concrete block can be assembled easily on-site, and since the concrete block is formed in the three dimensional solid shape to be corresponded to the planned alignment, it is not necessary to align separately slopes of transverse and longitudinal directions of the blocks on-site. Meanwhile, no gaps are produced between the respective concrete blocks when connecting the respective concrete blocks on the horizontal and vertical curves on-site, so an additional operation for filling the gap is not required. Additionally, the curve radius and transverse slope (cant) can be set, and consequently, the concrete block can be manufactured corresponding to the planned horizontal alignment, vertical alignment and transverse alignment.

Additionally, since the concrete blocks are manufactured in advance at a factory rather than on-site, it is possible to lay the railroad tracks with uniform quality, and further since the rails can be installed on-site by installing the concrete blocks, connecting them, and mounting the rail fastening mechanisms, thereby the amount of construction on-site is reduced, and a construction period can be shortened accordingly.

### BRIEF DESCRIPTION OF THE DRAWINGS

FIGS. 1a to 1d are perspective views showing a conventional precast slab track system.
FIG. 2 is a sequential diagram showing a method for manufacturing a solid three-dimensional concrete block according to an exemplary embodiment of the present invention.
FIGS. 3a and 3e are views showing a manufacturing process of a concrete block according to an exemplary embodiment of the present invention.
FIG. 4 is a perspective view showing a concrete block manufactured by a manufacturing method according to an exemplary embodiment of the present invention.
FIGS. 5a to 5c are views showing a process for laying a railroad track using a concrete block illustrated in FIG. 4.
FIGS. 6a and 6b are plan views showing another exemplary embodiment of first molds used for a manufacturing method according to an exemplary embodiment of the present invention.

### BEST MODE FOR THE INVENTION

Hereinafter, exemplary embodiments of the present invention will be described below in more detail with reference to the accompanying drawings. However, the embodiments, which will be described below, are illustrative for only describing in detail the present invention to an extent that a person having ordinary skill in the art to which the present invention pertains can implement easily the present invention, and thus the protection scope thereof is not limited. Further, the same reference numerals are given to the constitutional elements having the same technical features in the descriptions of several embodiments of the present invention.

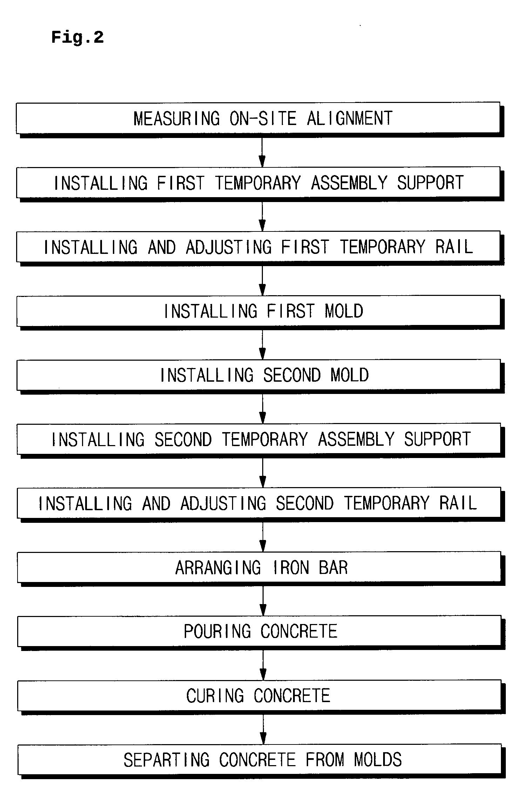

As shown in FIG. 2, the method for manufacturing a solid three-dimensional concrete block according to an exemplary embodiment of the present invention includes the steps of: measuring an on-site alignment; installing first temporary assembly supports; installing first temporary rails; installing first molds; installing second molds; installing the second temporary assembly supports; installing second temporary rails; arranging iron bars; pouring concrete; curing; and separating concrete from molds, wherein the concrete blocks that are separated from the molds are to be used as a turning-over type.

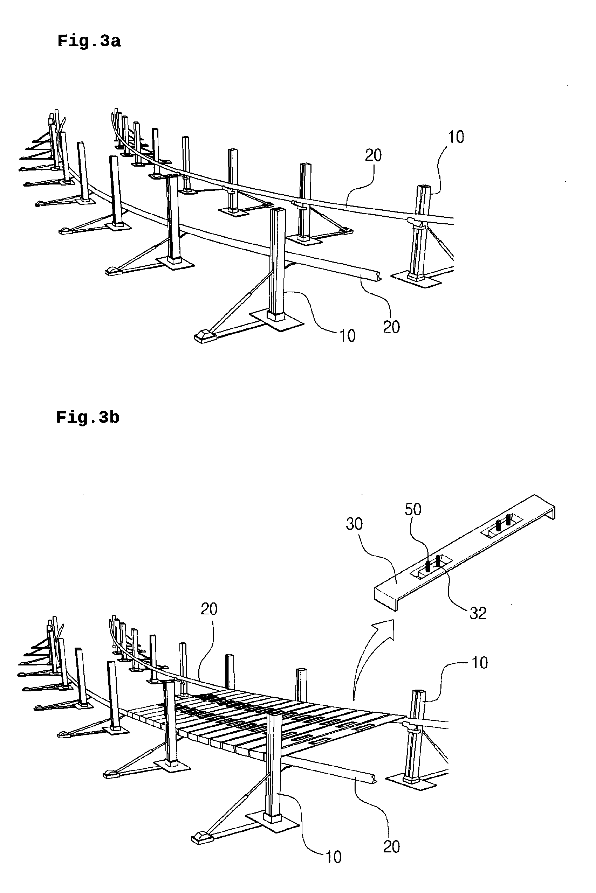

Referring to FIGS. 3a to 3e, a manufacturing process of a concrete block according to an exemplary embodiment of the present invention will be described in detail. Before manufacturing a concrete block, a planned alignment of a site where railroad tracks will be installed has to be measured. That is, the planned alignment is determined in consideration of geographical features of the site where tracks are installed, especially horizontal alignment, slope and cant of the site where rails are installed. Although not illustrated, the alignment of the rails is determined depending on the design conditions of the rails, on which information of the locations where tracks and rails are installed is measured using a light wave detector and the rails and tracks are to be constructed based on the information.

Then, as shown in FIG. 3a, first temporary assembly supports 10 are installed at a factory. In this case, the first temporary assembly supports 10 are installed facing each other on both sides of the ground, and especially, a plurality of the first temporary assembly supports 10 are arranged in a linear or curved shape as horizontal alignments which are symmetrical to horizontal alignments measured on site. Subsequently, since concrete blocks that are manufactured through the present process are installed on-site as a turning-over type in a subsequent process, the horizontal alignment at the site and the horizontal alignment of the first temporary assembly supports 10 have to be symmetrical. The first temporary assembly supports 10 have props (reference numeral is not given) and temporary rail fastening mechanisms (reference numeral is not given) that are formed at the top of a side of the props.

When the first temporary assembly supports 10 are installed, a pair of the first temporary rails 20 are installed to the first temporary assembly supports 10, respectively. In this case, as the first temporary rails 20 are installed to the first temporary assembly supports 10, similarly to the first temporary assembly supports 10, the first temporary rails are provided with the horizontal alignment which is symmetrical to the horizontal alignment measured at the site. However, the first temporary rails 20 are adjusted to be provided with slope and cant therebetween, corresponding to the slope and cant that are measured at the site. Such a first temporary rail 20 will be a standard on forming a concrete block, and accordingly, a concrete block of a three dimensional solid shape to which the conditions required at a site are affected directly may be formed.

When a first temporary rail 20 is installed, first mold 30 in a plate shape is installed on the first temporary rail 20 as shown in FIG. 3b. A plurality of the first molds 30 are installed to sit on the first temporary rail 20, to be in close contact with each other, wherein since a plurality of the first molds 30 each having a short length are installed to be in close contact with each other, a plurality of the first molds 30 are provided with horizontal alignment, slope and cant corresponding to the first temporary rail 20, and thus a three dimensional concrete block with the upper surface slope and cant, etc. can be formed.

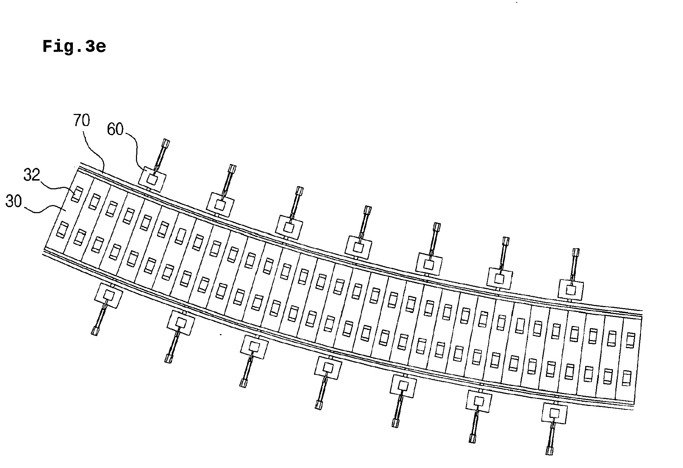

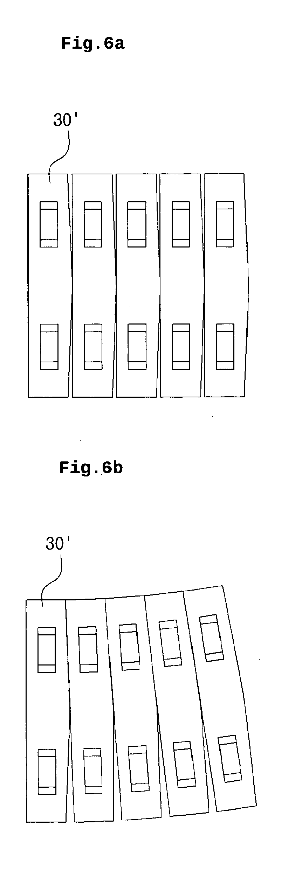

The first mold 30 is formed in a shape of a rectangular plate wherein lower curves (reference numeral is not given) that can be connected with the first temporary rail 20 may be formed on both ends. Meanwhile, another exemplary embodiment of the first molds is shown in FIG. 6a and FIG. 6b. As shown in the figures, a first mold 30' may be provided with a pointed portion (reference numeral is not given) at a rear end in order to adjust an angle of another neighboring first mold 30', and thus the first mold 30' can be connected easily with the neighboring first molds 30 in a curved shape, compared with a mold of a simple rectangular plate shape. That is, when molds are arranged to form a curved section as shown in FIG. 3e, there may be some difficulties in forming the curved section by using the first molds 30 in shapes of simple rectangular plates, however, by using the first molds 30' in shapes shown in FIG. 6a and FIG. 6b, the curved section may be formed easily.

Railroad tie beds 32 may protrude downwardly at positions spaced toward both ends from the center on the lower surfaces of the first mold 30. The railroad tie beds 32 protrude downwardly at the lower surface of the first molds 30 and concrete is poured from the upper part, which will be described later, thereby enabling compact filling up of concrete. However, such railroad tie beds are nothing but illustrative, and the railroad tie beds having various railroad ties that are applied to railway tracks may be provided to form various railroad ties.

Further, a plurality of embedded nuts 50 may be mounted upwardly to the locations of the first molds 30, which are spaced from the center to both ends. In this case, as shown in FIG. 3b, the embedded nuts 50 may be mounted to railroad tie beds 32 when the first molds 30 are provided with the railroad tie beds 32. The reason for mounting the embedded nuts 50 is for removing a process of perforating holes later on the upper face of a concrete block. That is, when the embedded nuts 50 are mounted to the first molds 30 and then a concrete block is manufactured by pouring and curing concrete, the rail fastening mechanisms may be mounted to the concrete block without an additional perforation process since the embedded nuts 50 are mounted to the upper surface of the concrete block. For reference, although the embedded nuts 50 are mounted to all of a plurality of the first molds 30, in FIG. 3b it is shown that the embedded nuts 50 are mounted to only one first mold 30 magnified for convenience's sake.

Additionally, although not illustrated, a shoulder for rail fastening may be connected through the lower surface of the first mold 30 to be protruded downwardly, and when the concrete block is manufactured by pouring and curing concrete and is turned over, it is manufactured with the shoulder mounted thereto, accordingly rails may be simply installed to the concrete blocks without any additional process thereafter.

As described above, according to the exemplary embodiment of the present invention, it has an advantage that any types of the railroad tie or the rail fastening mechanism can be applied since concrete can be poured while a shape of the railroad tie required is rendered or various rail fastening mechanisms are mounted to the lower surface of the first molds 30.

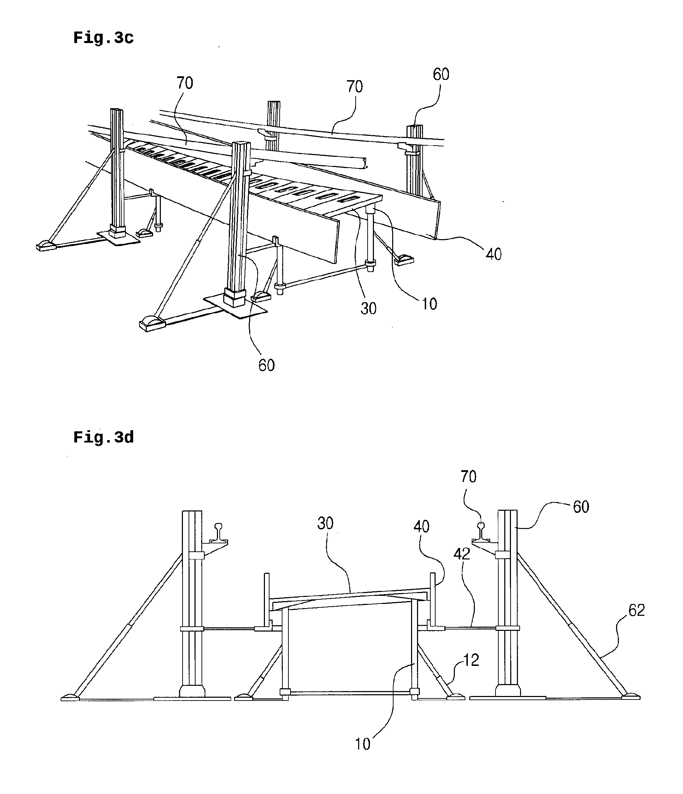

When the first molds 30 are installed, second molds 40 are installed as shown in FIGS. 3c and FIG. 3d. A pair of second molds 40 is installed along first temporary rail 20 to close upper lateral sides of first molds 30. For example, the second molds 40 may be installed to the first temporary assembly supports 10 and on the other hand, the second molds 40 may be installed to supports 42 that are horizontally mounted to the second temporary assembly supports 60, which are described later. The second molds 40 are provided with the same horizontal alignment as the first temporary rail 20 since it is installed along the first temporary rail 20. Further, when installing the second molds 40, the height of the second molds 40 may be adjusted to be provided with the same slope and cant as those of the first temporary rail 20. Meanwhile, when installing the second molds 40, the second molds 40 may be provided with a vertical alignment symmetrical to a vertical alignment of the roadbeds on-site, considering the vertical alignment of the roadbeds at on-site. When the second molds 40 is installed, a space is provided by the first molds 30 and the second molds 40, at which the concrete block is formed by pouring concrete, and the concrete block may be manufactured by arranging iron bars, and then pouring and curing concrete over the first molds 30.

In this case, second temporary assembly supports 60 and second temporary rails 70 may be installed in relation with pouring concrete and shaping the upper surface thereof, as shown in FIGS. 3c and FIG. 3d. Here, the upper surface of concrete that is poured over the first molds 30 corresponds to the surface contacting a roadbed when applied to a site later.

A pair of the second temporary assembly supports 60 is installed on the outsides of the first temporary assembly supports 10, respectively. In this case, a plurality of the second temporary assembly supports 60 are arranged to be provided with horizontal alignment corresponding to the first temporary assembly supports 10.

When second temporary assembly supports 60 are installed, a pair of the second temporary assembly rails 70 is installed to second temporary assembly supports 60, respectively. In this case, when installing the second temporary rails 70, the second temporary rails may be adjusted to be provided with the vertical alignment symmetrical to the vertical alignment of the roadbed on-site in order to allow the lower surface of the concrete block that will be used in a turning over type later to be provided with the vertical alignment corresponding to that of the roadbeds on-site. Second temporary rails 70 are installed at higher position than first molds 30 and second molds 40, and an adjustment mechanism 62 is mounted to second temporary assembly supports 60 for adjusting the height of the second temporary rails 70. For reference, reference numeral 12 that is not described refers to an adjustment mechanism for adjusting the height of a temporary rail fastening mechanism of first temporary assembly supports 10.

When second temporary assembly rails 70 are installed, concrete is poured over first molds 30.

After pouring concrete, a surface of poured concrete is shaped by using a finisher (not illustrated) that moves along the second temporary rails 70. In this case, since a surface of concrete is shaped while the finisher moves along the second temporary rails 70, the surface of the poured concrete will be provided with a vertical alignment corresponding to the second temporary rails 70, and eventually the surface of the concrete may be provided with vertical alignment required on-site. Accordingly, a space which may be produced between a concrete block and roadbed, when the concrete block is installed to an on-site roadbed in a turning over type, can be minimized.

When shaping a concrete surface is completed, the concrete is cured and then separated from first molds 30 and second molds 40 to complete the manufacturing of the concrete block. In case of applying the concrete block on-site, the concrete block may be installed in a turning over type.

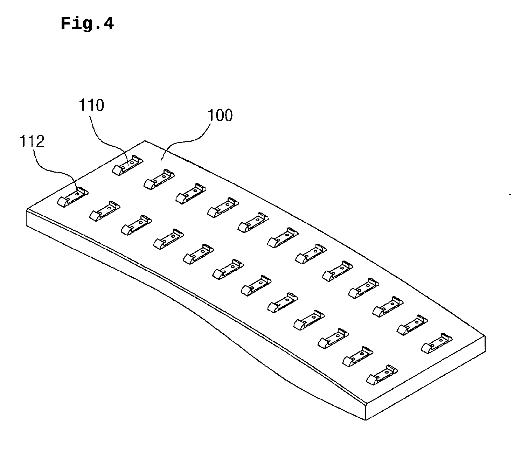

The concrete block manufactured through the method according to an exemplary embodiment of the present invention is shown in FIG. 4. The concrete block is formed in a three dimensional solid shape, provided with horizontal alignment, slope, cant and vertical alignment that are required on-site. In the concrete block, the railroad ties and the roadbeds are formed integrally through one process rather than being formed separately through additional process, wherein railroad tie 110 may be formed on the surface of the concrete block and the railroad tie may be shaped variously.

Meanwhile, when the embedded nuts are mounted to first molds 30 and concrete is poured and cured, fastening holes 112 necessary for fastening the rail fastening mechanism can be provided to the concrete block since the embedded nuts are inserted into the concrete block. In this case, the rail fastening mechanisms may be mounted to the concrete block by using bolts that are fastened to the embedded nuts provided in the concrete block after turning the concrete block over at a factory before transporting it to a site. Otherwise, the rail fastening mechanisms may be mounted to the concrete block after transporting and installing the concrete block to a site as described later.

If, instead of the embedded nuts, a shoulder for fastening the rails is connected through the lower surface of the first molds 30 to be protruded downwardly, the concrete block is manufactured at a factory by pouring and curing concrete and is transported and installed on-site, and thereby the rail can be directly installed thereto.

A method of laying railroad tracks on-site using the concrete block as manufactured above will be described below.

First, a concrete block which is manufactured at a factory is transported in a turn over type to a site.

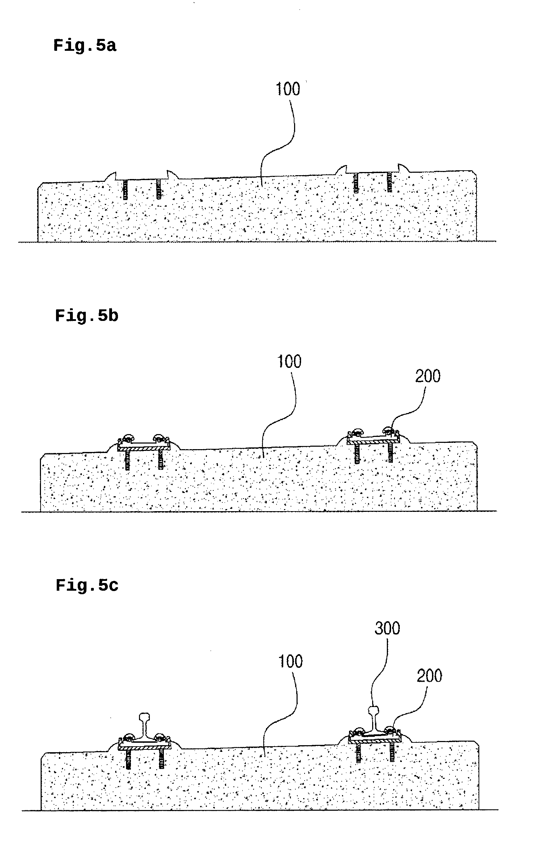

Then, as shown in FIG. 5a, the concrete block 100 is installed on a roadbed at the site. In this case, the concrete block 100 is installed to each partition corresponding to the measured alignment and the respective concrete blocks 100 may be assembled to be connected each other. Although not illustrated, the concrete block 100 and the roadbed may be connected with each other by pouring mortar between them. Meanwhile, since the lower surface of the concrete block 100 is formed to correspond to the vertical alignment of the roadbed, the concrete block 100 is just installed to sit on and fixed to the roadbed at a site.

After installing the concrete block 100, a rail fastening mechanism 200 is mounted on the concrete block 100 as shown in FIG. 5b, by using bolts (reference numeral is not given) to be fastened to the embedded nuts (reference numeral is not given) that are provided in the concrete block 100. As described above, an additional process of perforating holes is not required for mounting the rail fastening mechanism 200, so the rail fastening mechanism 200 can be mounted directly using the bolts. However, as described above, in case of mounting the rail fastening mechanism 200 to the concrete block after separating the concrete block from the mold and turning over the concrete block at a factory, this process may be omitted at the site.

When rail fastening mechanism 200 is completely mounted, the rail 300 is fixed thereto, and thereby laying of the railroad tracks is completed, as shown in FIG. 5c.

### INDUSTRAIL APPLICABILITY

According to an exemplary embodiment of the present invention, railroad tracks can be laid by installing and assembling a solid three-dimensional concrete block in advance at a factory, thereby the railroad tracks with uniform quality can be laid on-site and problems caused from a conventional concrete pouring at a site can be improved, and moreover, the amount of construction on-site is reduced, and thus the required construction period can be shortened.

## Claims

1. A method of manufacturing a solid three-dimensional concrete block in which a plurality of the concrete blocks are connected to form a railway track, comprising:
measuring the planned alignment considering horizontal alignment, slope and cant of a site on which a railway track is to be laid;
arranging a plurality of the first temporary assembly supports as horizontal alignments which are symmetrical to the measured horizontal alignment on both sides of the ground of a factory;
installing a pair of first temporary rails on the first temporary assembly supports, respectively, to be provided with horizontal alignments symmetrical to the measured horizontal alignments, and adjusting the installing of the first temporary rails such that the slope and cant corresponding to the measured slope and cant are provided between the first temporary rails;
installing a plurality of first molds formed in a plate shape on the first temporary rails and arranging them along the first temporary so that the slope and cant corresponding to the measured slope and cant are provided to a plurality of the first molds;
installing a pair of second molds along the longitudinal direction of the first temporary rails to close upper lateral sides of the first molds;
installing a pair of second temporary assembly supports to be disposed on the outside of the first temporary assembly supports, respectively, and arranging a plurality thereof as horizontal alignment corresponding to the first temporary assembly supports;
installing a pair of second temporary rails on the second temporary assembly supports, respectively, and adjusting the installation of the second temporary rails such that a vertical alignment corresponding to the vertical alignment of an on-site roadbed is provided;
pouring concrete over the first molds;
shaping a surface of concrete poured with a finisher moving along the second temporary rails;
curing the poured concrete; and
separating the cured concrete from the first molds and the second molds, and subsequently turning the concrete over.

2. The method for manufacturing a solid three-dimensional concrete block of claim 1, wherein railroad tie beds are formed to be protruded downwardly at locations spaced from the center to both ends on the lower surfaces of the first mold.

3. The method for manufacturing a solid three-dimensional concrete block of claim 1, wherein the first mold is formed in a shape of a rectangular plate while lower curves are formed to be connected with the first temporary rail on both ends and a pointed portion is formed at each rear end part so as to adjust an angle of neighboring another first mold.

4. The method for manufacturing a solid three-dimensional concrete block of any one of claims 1 to 3, wherein a plurality of embedded nuts are mounted to the first mold to be directed upward at positions spaced from a center portion to both ends

5. The method for manufacturing a solid three-dimensional concrete block of claim 4, further comprising of mounting a rail fastening mechanisms to the concrete block after turning the concrete block over by using bolts that are fastened the embedded nuts provided in the concrete block.

6. The method for manufacturing a solid three-dimensional concrete block of any one of claims 1 to 3, wherein a shoulder for fastening the rail is connected through the lower surface of the first mold to be protruded downwardly.

7. A method of manufacturing a solid three-dimensional concrete block in which a plurality of concrete blocks are connected to form a railway track, comprising:
measuring the planned alignment considering horizontal alignment, slope and cant of a site on which a railway track is to be laid;
arranging a plurality of first temporary assembly supports as horizontal alignments which are symmetrical to the measured horizontal alignment on both sides of the ground of a factory;
installing a pair of first temporary rails on the first temporary assembly supports, respectively, to be provided with horizontal alignments symmetrical to the measured alignments, and adjusting the installing of the first temporary rails such that the slope and cant corresponding to the measured slope and cant are provided between the first temporary rails;
installing a plurality of first molds formed in a plate shape on the first temporary rails and arranging them along the first temporary so that the slope and cant corresponding to the measured slope and cant are provided to the plurality of molds;
installing a pair of second molds along the longitudinal direction of the first temporary rails to close the upper lateral sides of the first molds;
pouring concrete over the first molds;
curing the poured concrete; and
separating the cured concrete from the first molds and the second molds, and subsequently turning the concrete over.

8. A method of laying concrete tracks using a concrete block, comprising:
transporting the concrete block manufactured using the method of claim 4 to a site;
installing and adjusting the transported concrete block by each partition to correspond to the measured alignment;
mounting the rail fastening mechanisms to the concrete block by using bolts that are fastened to the embedded nuts provided in the concrete block; and
installing the rails to be fixed to the rail fastening mechanisms.

9. A method of laying concrete tracks using a concrete block, comprising:
transporting the concrete block manufactured using the method of claim 5 to a site;
installing and adjusting the transported concrete block by each partition to correspond to the measured alignment;
and
installing the rails to be fixed to the rail fastening mechanisms.
